Europäisches Patentamt

(19) European Patent Office

Office européen des brevets

(11) Publication number: 0 109 771
A1

# (12) EUROPEAN PATENT APPLICATION

(21) Application number: 83306437.1

(22) Date of filing: 24.10.83

(51) Int. Cl.³: **A 23 L 1/236**
**A 23 L 2/38, A 23 L 2/40**
**A 23 F 3/32**

(30) Priority: 25.10.82 US 436474

(43) Date of publication of application:
30.05.84 Bulletin 84/22

(84) Designated Contracting States:
AT BE CH DE FR GB IT LI LU NL SE

(71) Applicant: GENERAL FOODS CORPORATION
250 North Street
White Plains, N.Y. 10625(US)

(72) Inventor: Ponzoni, Ronald William
75, Lakeside Drive
Nutley New Jersey 07110(US)

(72) Inventor: Kirkpatrick, Paul Anthony
RD No. 4, Box 472
Jackson New Jersey 08527(US)

(72) Inventor: Bertalan, Charles William
249, Hamilton Street
New Brunswick New Jersey 08901(US)

(74) Representative: Baillie, Iain Cameron et al,
c/o Ladas & Parry Isartorplatz 5
D-8000 München 2(DE)

(54) Agglomerating aspartame sweetened products with dextrins.

(57) The process provided by the present inventon elucidates a method for preparing a comestible mix that is sweetened via a dipeptide sweetener (aspartame). The agglomeration method is achieved by the use of an agglomerating vehicle, thereby allowing the fixation via agglomeration of physically idiosyncratic components.

EP 0 109 771 A1

Case 2960

## DESCRIPTION
### AGGLOMERATING ASPARTAME SWEETENED
### PRODUCTS WITH DEXTRINS

Technical Field

The present invention relates generally to agglomeration methods and more specifically to an improved method for fixing aspartyl-phenyalanine methyl ester (aspartame) on an edible composition by agglomeration.

In the food processing arts there are many procedures which may be employed to present a dried and reconstitutable comestible mix to the consumer. One process includes merely the dry blending of components and the inclusion of said components within an appropriate container or jar. Such blends are of great utility when the product that is produced thereby is composed of easily manageable components, so that a mix of a single homogenous character may be prepared thereby. For example, a cake or batter mix may be easily packaged by employing a like procedure. Other formulations are inherently resistive to such simple ministrations. When the packaged product is composed of many disparate components or constituents that display atypical physical behavior, a more sophisticated procedure must be employed so that homogeneity of composition may be insured. Moreover, if the specified components are easily degraded, special processing parameters must be found. Therefore, it is imperative to offer a method to join a variety of heterogenous components in a cohesive unit, so that said disparate components are resistant to settling, migrating or concentrating within the container thereby giving rise to an uneven product.

Of the many available techniques which one may employ to insure a homogenous mix, agglomeration appears to provide an ideal procedure for presenting a dried comestible mix composed of many disparate and unstable components. Moreoever, the agglomeration procedure is extremely well suited to those hard to handle materials that tend to either recoalesce from or that tend to gravitate through the mix to the bottom of the container, or for those materials that when processed generate a great amount of dust.

Agglomeration procedures in general permit the processor to produce a freely flowable mix of uniform particles from a total mix of components, said components as a rule cannot easily be processed. For example, aspartic acid derived dipeptide sweeteners tend to be unstable or unmanageable mix components. When the dipeptide aspartame, is incorporated into a comestible or beverage mix, the aspartame crystals tend to not only "stick" to the processing machinery but also to one another. Adhesion of the sweetener to the inner surfaces of the machine and the subsequent clumps which form within the mix, mandate that the dipeptide somehow be prevented from free movement.

Agglomeration procedures per se are not new, in fact, the prior art relating thereto is rife with examples of a variety of agglomeration procedures and agglomerating agents. It is of import to note

-3-

that the prior art does not disclose an agglomeration procedure wherein aspartame is the sweetener of choice.

Of the prior art listed hereinabove, U.S. Patent 3,359,119 issuing to Milton et al discloses a method for coagglomerating various mixes wherein the agglomerating agent is a dextrin. The instant reference speaks to agglomerating mixes wherein the sweetening agent is sugar, cyclamates or saccharine and does not speak to new and idiosyncratic dipeptides or other novel sweetening agents. Moreover, it should be noted that not only do the above listed sweetening agents not pose the same processing or solubility problems that aspartame (APM) presents but also the problems endemix to presenting aspartame via agglomeration does not appear therein.

DISCLOSURE OF THE INVENTION

Accordingly, the process for effecting the improved agglomeration method follows. First, a plurality of ingredients such as flavorings, fillers, and acids, together with the aspartame (APM), is added to a blender so that a homogenous dry mix is achieved. From the blender, the homogenous mix is introduced directly into an agglomerating apparatus, said apparatus capable of fluidizing the mix. Alternatively, mixing can be effected in a batch agglomerator via fluidization before actual agglomeration is commenced. An aqueous solution containing a low D.E. dextrin or other analogous agent is used as an agglomerating vehicle, spraying said aqueous solution into the agglomeration unit so that the disparate particles are made to coalesce into regular sized particles thereby fixing the aspartame onto the edible substrate. The newly formed agglom-

-4-

erates are dried and the agglomerates which represent the total mix of components may then be packaged. The agglomerates embrace, in and of themselves a finished, reconstitutable comestible product and may then be assimilated directly into containers for sale. The packaged mix which is agglomerated via an agglomerating vehicle effectively prevents the APM from migrating out of the agglomerate by virtue of fixation of APM on said defined substrate, and thereby insures a reproduceable and homogenously sweet product with an extended shelf-life. Agglomeration also permits the APM to be readily wetted and solubilized when the agglomerate is added to an aqueous medium.

The improved method for fixing aspartame via agglomeration is outlined in a stepwise fashion hereinbelow. First, aspartame (APM) of a suitable particle size, said size being between 0.5-300 microns is obtained and is to be blended with appropriate amounts of flavor and appropriate amounts of food acid. Oversized particles would necessitate grinding the APM so that 95% of said APM by weight percent is within a preferred particle size range of from 5-125 microns. The ingredients including an organic acid, and one or more of a plurality of flavorings are combined for blending.

The blending operation, which may be effected via a ribbon-type blender, a V-blender or other suitable device, involves the addition of the total contents that is all components with the exception of colorings, to be added to a holding container. Activation of the blender for a blending period which is proportional to the amount of "mix" results in a homogenous mixture. The mixture is then ready to undergo further processing.

The thoroughly admixed components are then transferred to a fluidized bed agglomerating unit, said unit may be either a "batch"-type or a kind that employs an endless foraminous belt and is continuous in nature. The agglomeration procedure is initiated with the addition of the admixture to the agglomerator, wherein the particles are induced to rise above the base portion and are kept suspended therein. The inlet air temperature must be kept below a maximum of 204.4°C (400°F) with a preferred inlet temperature range of ambient to 100°C (212°F). Within the agglomerator environment, the finely divided particles of the mix are fluidizedly suspended within the machine, the APM component being dispersed evenly throughout.

As a preferred embodiment, an aqueous solution composed of dextrins and colorants is used as the agglomerating vehicle to bind the fluidized and finely dispersed particles. Due to the adhesive qualities of dextrins, the particles which comprise the comestible mix are in essence cemented or fixed to the various components of the mix to form regular sized particles thereby. The APM is taken by the dextrin solution and fixed on the comestible substrate. Unlike using citric acid or other organic acids, as agglomerating vehicles, dextrins are essentially amorphous and will not form a hard crystalline-shelled agglomerate. Moreover, the agglomerate is essentially non-hygroscopic, so that it will not attract water as an acid-shelled agglomerate will.

According to this invention the agglomerating vehicle is an aqueous solution containing a colorant and from 0.5% to 80% by weight of a binding agent selected from the group consisting of 0.5 to 24 D.E. dextrins, preferably 5 to 15 D.E., corn syrup solids, high fructose corn syrup solids, modified starches and gums. When dextrins are utilized, a preferred concentration will be in the range of from 20% to 60% by weight of the solution, when corn syrup solids and or high fructose corn syrup solids are used a concentration of from 40% to 80% will be preferred, when the modified starches are used a concentration of from 0.5% go 50% will be preferred, and when gums (e.g., pectin, xanthan, gum arabic, carboxymethyl cellulose) are used, a concentration of from 0.5% to 20% will be preferred. The agglomerating vehicle is maintained at a temperature of up to but not exceeding 100°C (212°F) and is sprayed onto the fluidized bed. Spraying may be accomplished by one or more nozzles or similar spray assemblies, which spray the solution into the fluidized mix. The agglomerating vehicle is sprayed in at a rate so that it is dispensed within about one hour. Atomization of the fluid is effected by introducing compressed air at between .5 to 5.0 bar with a preferred range of operating pressures between 2.0-4.0 bar.

The newly formed agglomerates display a vivid color and a uniform size. By including the coloring as a component of the agglomerating vehicle, the intense color may directly color the agglomerate. The moisture content is between .6% and 4% after drying of the agglomerate has been effected with a preferred moisture content of less than 1%.

In this fixed state, the sweetener, for example APM, will stay deposited within the regularized particles of the comestible mix. Moreover, by using

-7-

dextrins, with a dextrose equivalent of .5-50 D.E. and more preferably with dextrins of dextrose equivalents of .5 to 20 or the previously mentioned modified starches or gums as a "cement", the APM, which is sensitive to moisture and acid, remains more resistant to harm or decomposition because it is not exposed to aqueous processing for long periods of time. At this point the agglomerated mix is ready to be packaged within appropriate containers and commercially marketed; the APM remaining in a fixed and stable condition for prolonged periods of time.

## BEST MODE FOR CARRYING OUT THE INVENTION
### EXAMPLE 1

The appropriately sized APM is added to a blending apparatus, for example, a Day Ribbon Blender with such components as citric acid, potassium citrate and flavor. In a lemon-lime flavored drink mix, the percentage by weight would be approximately 76% citric acid, 2% potassium citrate, 8% natural lemon flavor, 1% natural lime flavor, 5% APM and 0.5% Vitamin C. The above mentioned formulation is included in the ribbon blender with the mixture being mixed for approximately 15 minutes with samples extracted therefrom to ensure uniformity of the mixture. The blended mix may then be stored in fibre drums. The mix is then placed from the storage container into an agglomeration unit. The agglomerating equipment may be, for example, an Anhydro Model 38 continuous fluid bed agglomerator. The mixture is continuously fed using a screw conveyor to the agglomeration unit and air is introduced so as to fluidize the unit and the particles are held suspended above the air dispersion plate. The agglomeration vehicle is composed of 40% of 5 DE

-8-

Dextrin and 60% water with a coloring agent added within said solution. Therefore, not only is the agglomeration vehicle used to, in essence, cement the fluidized particles together, but also it is used to color the particles. The agglomerated product thereby is of a vivid color, adding to the overall desirability of the product. The processing is facilitated by using a three-zone unit. Metal weirs with adjustable heights are inserted into the unit, thus yielding three distinct processing zones. Each zone has the same bed surface area for fluidization and subsequent processing. In Zone 1, all binder solution is sprayed on using a conventional two-fluid nozzle with an atomization air pressure of 2.0 bar. Hence, Zone 1 is the primary agglomeration zone and preliminary drying zone. The inlet air temperature is approximately 90°C. Binder solution is continuously fed at a rate of 15 kg/hr. The inlet air temperature in Zone 2 is 90°C and, therefore, Zone 2 becomes the primary drying zone. The inlet air temperature to Zone 3 is 30°C. This zone functions as the cooling zone. Processed powder exits the unit as a dried agglomerate. The density of the agglomerate is 0.45-0.6 grams per cc with a moisture content of between 1.0 and 1.8% by weight. The product throughput rate is 100-115 kg/hr. Tricalcium phosphate or another flow agent is added to the agglomerate and dispersed using conventional methods. Finished product is now ready for packaging.

## EXAMPLE 2

A comestible mix, and more specifically a flavored beverage mix is set out by example hereinbelow, utilizing the instant fixation via agglomeration process. The first step is to take the raw APM

-9-

dipeptide sweetener, and to mill said material to a particle size of between 5 to 125 microns or more preferably to 10 and 30 microns. The milled APM is added to a blending aparatus for example, a Day Ribbon Blender with such components as citric acid, potassium citrate, natural fruit flavorings, juice solids, and a portion of vitamin C. For example, in a fruit flavored drink mix, the percentage by weight would be approximately 50-80% citric acid, 5-13% potassium citrate, 7% natural lemon flavor, 4% ground APM, 2% leomon juice solids, .5% vitamin C. The above mentioned formulation is included in the Ribbon Blender with the mixture being mixed for approximately 15 minutes with samples extracted therefrom to insure uniformity of the mixture. The blended mix may then be stored in fibre drums. The mix is then fed from the storage container into an agglomeration unit, each batch of about 2000 lb (907.2 kg). The agglomerating means may be for example, a Glatt fluid bed agglomerator Model WSG-500 which is available from Glatt Air Techniques, Ramsey, New Jersey. The mixture is added to the agglomeration unit and air is introduced so as to fluidize the particles of the complete mix. The fluidization air is introduced at 4000 cubic meters per hour and the particles are held suspended above the agglomerating base. The agglomerating vehicle is composed of 40% of .5 to 20 D.E. dextrin and 60% water with a coloring agent added within said solution. The rate at which the agglomeration vehicle is sprayed is 1400 ml/min, so that the agglomeration vehicle which is comprised of 40% Lodex, (a low D.E. malto-dextrin), trademark of Amazo Co., Hammond Indiana and 60% water with colorant, induces the formation of agglomerated particles. With an inlet

-10-

air temperature of between 40 and 70°C and a resulting oulet air temperature of 30 to 50°C agglomeration takes place. The compressed air, which is at an atomization pressure of 4 Barrs, is used to power the agglomeration vehicle as it is sprayed over and through the fluidized particles. The spraying phase of the process takes approximately one hour or less. With the agglomeration procedure essentially completed and the formation of agglomerate particles achieved, the temperature is increased to 80°C to facilitate drying. Therefore, not only is the agglomeration vehicle used to in essence cement the fluidized particles together, but also it is used to color plate the partcles. The agglomerate produced thereby is of a vivid color, adding to the overall desireablity of the product. The product is then dried to 1% moisture with a drying temperature that is about 80°C. Tricalcium phosphate or another flow agent is added to the agglomerator and fluidized for 2 to 3 minutes to disperse the ingredients. After this procedure, the product is then discharged and may be immediately packaged. The density of the agglomerate is about .7 to .8 grams per cc with a moisture content of between .8 and 1.4% by weight.

## EXAMPLE 3

By employing the above described fixation via agglomeration methods a fruit flavored beverage may be made with a representative percentage by dry weight distribution of ingredients as follows:

| Ingredient | Percent by weight |
|---|---|
| Acidulent | 35-90% |
| Flavors | 3-30% |
| Aspartame | 2-10% |
| Maltodextrin | .005-20% |

-11-

| Ingredient | Percent by weight |
|---|---|
| Potassium citrate | 0-25% |
| Tricalcium phosphates | 0-20% |
| Color | 0-3% |
| Vitamin C | 0-10% |
| Gums | 0-5% |

### EXAMPLE 4

The process according to the above enumerated methods may be used to produce a citric (orange, lemon-lime) beverage, said beverage being composed of:

| Ingredient | Percent by weight |
|---|---|
| Acidulents | 40-80% |
| Flavors | 5-25% |
| Aspartame | 2-10% |
| Maltodextrin | 2-5% |
| Potassium citrate | 1-10% |
| Tricalcium phosphates | 2-5% |
| Color | .01-1% |
| Vitamin C | .05-1% |
| Xanthum gum | .01-1% |

### EXAMPLE 5

The process according to the above-enumerated methods may be used to produce a fruit punch flavored beverage, said beverage being composed of:

| Ingredient | Percent by weight |
|---|---|
| Acidulents | 40-60% |
| Flavors | 5-15% |
| Aspartame | 4-10% |
| Maltodextrin | 3-8% |
| Potassium citrate | 5-15% |
| Tricalcium phosphates | 4-10% |
| Color | .5-3% |
| Vitamin C | .5-1.5% |

-12-

## EXAMPLE 6

The process according to the above enumerated methods may be used to produce a tea flavored beverage, said dry mix being composed of:

| Ingredient | Percent by weight |
|---|---|
| Acidulents | 20-40% |
| Flavors | 0-10% |
| Tea | 25-55% |
| Aspartame | 2-10% |
| Maltodextrin | .25-50% |
| Magnesium Oxide | 2-5% |
| Color | 0-2.5% |
| Vitamin C | 0-10% |

The advantages endemic to the above-presented invention follow. By agglomerating the total mix the need for further processing is thereby reduced. By fixing via agglomerating the dipeptide sweetener within the other components an agglomerate which presents the total product may be obtained. Agglomerates by their very nature are amenable to being handled by unmodified machinery. Most importantly, the improved fixation of the dipeptide sweetener APM via agglomeration outlined hereinabove prevents degradation of the dipeptide sweetener APM. By fixing the sweetener directly onto the mix components so that a particle composed of the whole mix base is obtained, eliminates the need for dissolving the APM. With the relative absence of water the dipeptide which is sensitive to aqueous acid media may be interposed on an essentially-acid mix product without the risk of consequent breakdown. Moreover, the increased size and composition of the agglomerates aid in the solubility of not only the APM but also such components as tea solids.

-13-

Unlike other agglomerates, wherein the agglomerating vehicle is composed of water, the dextrin-bound agglomerates are substantially flexible, and resist cracking or splitting when packaged. The dextrin-bound agglomerates will also facilitate dissolution, as they will rapidly sink to the bottom of the cold water solute. More, simplistically, the dextrin-bound agglomerate requires less energy to manufacture, since less water has to be driven off in drying final product.

Therefore while the present invention is defined in terms of dextrins, other materials like modified starches and gums may be adaptively substituted so that they would be included fit within the purview of the claims which follow.

-14-

## CLAIMS

1. A method for fixing aspartame on a comestible substrate via agglomeration comprising the steps of:

a. mixing an organic acid, flavoring and a dipeptide sweetener; and

b. fluidizing said mixture with heated air; and

c. agglomerating said fluidized mixture via an aqueous agglomerating vehicle.

2. A method according to claim 1 wherein the agglomerating vehicle contains from 0.5 to 80% by weight of a binding agent.

3. A method according to claim 2 wherein said agglomerating vehicle contains from 20% to 60% of a dextrin.

4. A method according to claim 2 wherein the agglomerating vehicle contains from 40% to 80% of corn syrup solids and/or high fructose corn syrup solids.

5. A method according to claim 2 wherein said agglomerating vehicle contains from 0.5% to 20% of gums.

6. A method according to claim 5 wherein said binding agent is a gum selected from the group consisting of pectin, CMC, gum arabic, and xanthan.

7. A method according to claim 2 wherein the agglomerating vehicle contains from 0.5% to 50% of modified starches.

8. A method according to claim 3 wherein said dextrin has a DE of from about 5 to 15 DE.

9. A method according to claim 1 wherein said agglomerating step is conducted at an inlet air temperature of less than 400°F.

-15-

10. A product according to the method of claim 1.

11. A method according to claim 1 wherein the dipeptide sweetener is aspartyl-phenylalanine methyl ester, said dipeptide having a particle size between 0.5-300 microns.

12. A tea beverage product according to the method of Claim 1 further comprising on a dry weight basis:

    a.   20-40% of an acidulent;
    b.   0-10% of a flavoring agent;
    c.   25-50% of tea solids;
    d.   2-10% of a dipeptide sweetener;
    e.   .25-50% of a dextrin;
    f.   2-5% of magnesium oxide;
    g.   0-2.5% of a coloring; and
    h.   0-10% of Vitamin C

13. A fruit punch beverage product according to the method of claim 1 further comprising on a dry weight basis:

    a.   40-60% of an acidulent;
    b.   5-10% of a flavoring agent;
    c.   4-10% of a dipeptide sweetener;
    d.   3-8% % of a dextrin;
    e.   5-15% of potassium citrate
    f.   4-10% of tricalcium phosphate
    g.   .5-3% of a coloring; and
    h.   .5-1.5% of Vitamin C

14. A citrus flavored beverage product according to the method of claim 1 further comprising on a dry weight basis:

    a.   40-80% of an acidulent;
    b.   5-25% of a flavoring agent;
    c.   2-10% of a dipeptide sweetener;

-16-

d.   2-5% of a dextrin;

e.   1-10% of potassium citrate;

f.   2-5% of tricalcium phosphate;

g.   .01-1% of a coloring agent;

h.   .05-1% of Vitamin C; and

i.   .01-1% of gum.

15.   A fruit flavored beverage product according to the method of claim 1 further comprising on a dry weight basis:

a.   35-90% of an acidulent;

b.   3-30% of a flavoring agent

c.   1-15% of a dipeptide sweetener;

d.   .005-20% of a dextrin;

e.   0-25% of potassium citrate;

f.   0-20% of tricalcium phosphate;

g.   0-3% of a coloring agent;

h.   0-10% of Vitamin C; and

i.   0-5% of a gum.

A70f

**European Patent Office**

# EUROPEAN SEARCH REPORT

EP 83 30 6437

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 509 257 (GENERAL FOODS CORP.) <br> * Pages 16-20; example; claims 1, 2, 5, 8, 13, 21 * | 1,3,8, 9,11 | A 23 L 1/236 <br> A 23 L 2/38 <br> A 23 L 2/40 <br> A 23 F 3/32 |
| | --- | | |
| D,A | US-A-3 359 119 (C.H. MILTON) <br> * Column 5; example 1; claims 1-3 * | | |
| | --- | | |
| A | FR-A-2 366 804 (GENERAL FOODS CORP.) <br> * Page 6; example 3 * | | |
| | --- | | |
| A | DE-A-2 317 715 (GENERAL FOODS CORP.) <br> * Page 4; example 1 * | | TECHNICAL FIELDS SEARCHED (Int. Cl. ³) |
| | --- | | |
| A | US-A-4 051 268 (P.J. SHIRES et al.) <br> * Column 9; example 1 * | | A 23 L 1/00 <br> A 23 L 2/00 <br> A 23 F 3/00 |
| | ----- | | |

The present search report has been drawn up for all claims

| Place of search | Date of completion of the search | Examiner |
|---|---|---|
| BERLIN | 29-12-1983 | SCHULTZE D |